# EUROPEAN PATENT APPLICATION

(11) **EP 4 510 524 A1**
(43) Date of publication of application: **19.02.2025**
(21) Application number: 23802755.1
(22) Date of filing: 05.05.2023
(51) Int. Cl.: H04L 45/00

(54) **MESSAGE PROCESSING METHOD AND APPARATUS, CUSTOMER PREMISE EQUIPMENT, POINT OF PRESENCE, AND STORAGE MEDIUM**

(30) Priority: 07.05.2022 CN 202210495280
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: ZHANG, Xiaoqiu, Beijing 100032 (CN); YANG, Feng, Beijing 100032 (CN); CHENG, Weiqiang, Beijing 100032 (CN); HAN, Tingting, Beijing 100032 (CN)
(74) Representative: Murgitroyd & Company
(86) International application number: PCT/CN2023/092241
(87) International publication number: WO 2023/216983

(57) **Abstract**

A message processing method, a device, a customer premise equipment, a point-of-presence and a storage medium are provided, where the method includes: receiving a first message sent by a point of presence (PoP); where the first message carries first information of each cloud node of at least two cloud nodes, the first information represents detection information of the cloud node.

## Description

### CROSS REFERENCE OF RELATED APPLICATION

The present disclosure claims a priority of Chinese patent disclosure No. 202210495280.2 filed on May 7, 2022, which are incorporated herein by reference in its entirety.

### TECHNICAL FIELD

The present disclosure relates to the field of communication technology, and in particular to a message processing method, a device, a customer premise equipment, a point-of-presence and a storage medium.

### BACKGROUND

A Software Defined Wide Area Network (SD-WAN) based on Segment Routing IPv6 (SRv6) of Internet Protocol Version 6 (IPv6), services that provide the same service may be deployed in different public clouds or edge clouds. In the related art, when a cloud service switching is performed in a multi-cloud scenario, the switching speed is slow and the service delay is long.

### SUMMARY

To solve related technical problems, the embodiments of the present disclosure provide a message processing method, a device, a customer premise equipment, a point-of-presence and a storage medium.

The embodiment of the present disclosure is implemented as follows:

A message processing method is provided in the embodiment of the present disclosure, applied to a customer premise equipment (CPE), including:
receiving a first message sent by a point of presence (PoP); where
the first message carries first information of each cloud node of at least two cloud nodes, the first information represents detection information of the cloud node.

In the above embodiment, the first information of each cloud node of the at least two cloud nodes is encapsulated in a first TLV of a segment routing header (SRH) of the first message.

In the above embodiment, the method further includes:
changing a segment identifier (SID) of a last hop in a segment list of a second message from a first SID to a second SID, based on the first information of each cloud node in the at least two cloud nodes; where
the first SID represents a SID allocated to a user by a first cloud node of the at least two cloud nodes; and the second SID represents a SID allocated to the user by a second cloud node of the at least two cloud nodes.

In the above embodiment, after changing the SID of the last hop in the segment list of the second message from the first SID to the second SID, the method includes:
updating the segment list of the second message, according to the second SID.

In the above embodiment, before changing the SID of the last hop in the segment list of the second message from the first SID to the second SID, the method further includes:
notifying the terminal that sends the second message to re-encapsulate the second message according to an IP address of the second cloud node.

In the above embodiment, before changing the SID of the last hop in the segment list of the second message from the first SID to the second SID, the method further includes:
determining the second cloud node, based on the first information and second information of each cloud node of the at least two cloud nodes; where
the second information represents a path quality from the CPE to the corresponding cloud node.

In the above embodiment, the determining the second cloud node based on the first information and the second information of each of the at least two cloud nodes includes:
reporting the first information and second information of each cloud node of the at least two cloud nodes to a controller;
receiving third information returned by the controller; where
   the third information is configured to indicate the second cloud node; the second cloud node is determined by the controller based on information reported by the CPE.

In the above embodiment, the first information includes at least one of the following information of the cloud node:
network-related performance indicators;
service-related performance indicators;
availability detection results;
resource location detection results.

A message processing method is provided in the embodiment of the present disclosure, applied to point of presence (PoP), including:
sending a first message to a customer premise equipment (CPE); where
the first message carries first information of each cloud node of at least two cloud nodes, the first information represents detection information of the cloud node.

In the above embodiment, the first information of each cloud node of the at least two cloud nodes is encapsulated in a first TLV of a segment routing header (SRH) of the first message.

In the above embodiment, the method further includes:
receiving a second message; where a segment identifier (SID) of a last hop in a segment list of the second message is configured as a second SID and a destination IP address of the second message points to a first cloud node; the second SID represents a SID assigned to a user by a second cloud node;
sending the second message, based on a mapping relationship between the second SID and the second cloud node.

In the above embodiment, before sending the second message, the method further includes:
modifying a first path based on an IP address of the second cloud node; where
the first path represents a path from the PoP to the second cloud node.

In the above embodiment, before sending the first message to the CPE, the method further includes:
receiving first information reported by each of the at least two cloud nodes.

In the above embodiment, the first information includes at least one of the following information of the cloud node:
network-related performance indicators;
service-related performance indicators;
availability detection results;
resource location detection results.

A message processing device is provided in the embodiment of the present disclosure, including:
a first receiving unit, configured to receive a first message sent by a point of presence (PoP); where
the first message carries first information of each cloud node of at least two cloud nodes, the first information represents detection information of the cloud node.

A message processing device is provided in the embodiment of the present disclosure, including:
a first sending unit, configured to send a first message to a customer premise equipment (CPE); where
the first message carries first information of each cloud node of at least two cloud nodes, the first information represents detection information of the cloud node.

A customer premise equipment (CPE) is provided in the embodiment of the present disclosure, including a first processor and a first communication interface, where
the first communication interface is configured receive a first message sent by a point of presence (PoP); where
the first message carries first information of each cloud node of at least two cloud nodes, the first information represents detection information of the cloud node.

A point of presence (PoP) is provided in the embodiment of the present disclosure, including a second processor and a second communication interface, where
a second communication interface is configured to send a first message to a customer premise equipment (CPE); where
the first message carries first information of each cloud node of at least two cloud nodes, the first information represents detection information of the cloud node.

A customer premise equipment (CPE) is provided in the embodiment of the present disclosure, including a first processor and a first memory for storing a computer program executable on the first processor, where
the first processor is configured to execute the computer program to perform the above method at the CPE side.

A point of presence (PoP) is provided in the embodiment of the present disclosure, including a second processor and a second memory for storing a computer program executable on the processor, where
the second processor is configured to execute the computer program to perform the above method at the PoP side.

A storage medium is provided in the embodiment of the present disclosure, storing a computer program stored, where the computer program is executed by a processor to perform the above method at the CPE side, or to perform the method at the PoP side.

According to the message processing method, the device, the customer premise equipment, the point-of-presence and the storage medium provided by the embodiments of the present disclosure, the CPE receives a first message sent by the PoP; where the first message carries detection information of each cloud node of at least two cloud nodes. Thus, the CPE can perceive the detection information of multiple cloud nodes, thereby learning the service capabilities of different cloud nodes; when switching cloud services in a multi-cloud scenario, the CPE can select a cloud node that provides cloud services based on the detection information of the cloud node, thereby shortening the management and control process of switching cloud services between cloud nodes, speeding up the switching speed of cloud services, and reducing service delays.

### BRIEF DESCRIPTION OF THE DRAWINGS

FIG.1 is a schematic diagram of the architecture of an SRv6-based SD-WAN system in the related art;
FIG.2 is a flow chart of a message processing method according to an embodiment of the present disclosure;
FIG.3 is a schematic diagram of the structure of an IOAM head according to an embodiment of the present disclosure;
FIG.4 is a flow chart of another message processing method according to an embodiment of the present disclosure;
FIG.5 is a schematic diagram of an interactive flow of a message processing method according to an embodiment of the present disclosure;
FIG.6 is a schematic diagram of a structure of a message processing device according to an embodiment of the present disclosure;
FIG.7 is a schematic diagram of a structure of another message processing device according to an embodiment of the present disclosure;
FIG.8 is a schematic diagram of a structure of a customer premise equipment according to an embodiment of the present disclosure; and
FIG.9 is a schematic diagram of a point of presence structure according to an embodiment of the present disclosure.

### DETAILED DESCRIPTION

Before introducing the embodiments of the present disclosure, the related art are first described.

Most SD-WAN solutions use SD -WAN controllers to centrally manage and control enterprise wide area nodes, so as to centrally schedule application-based message forwarding according to the resource status of the entire network, and use Quality of Service (QoS) policies to ensure quality. Under the above implementation scheme, Overlay (virtual network) and Underlay (physical network) are viewed in a split manner, as well as cloud and network. This leads to rigid quality of cloud and network services. For example, in order to ensure high-quality services, the service level agreement (SLA) can only be guaranteed by accessing the enterprise wide area node through a dedicated line and running SD-WAN.

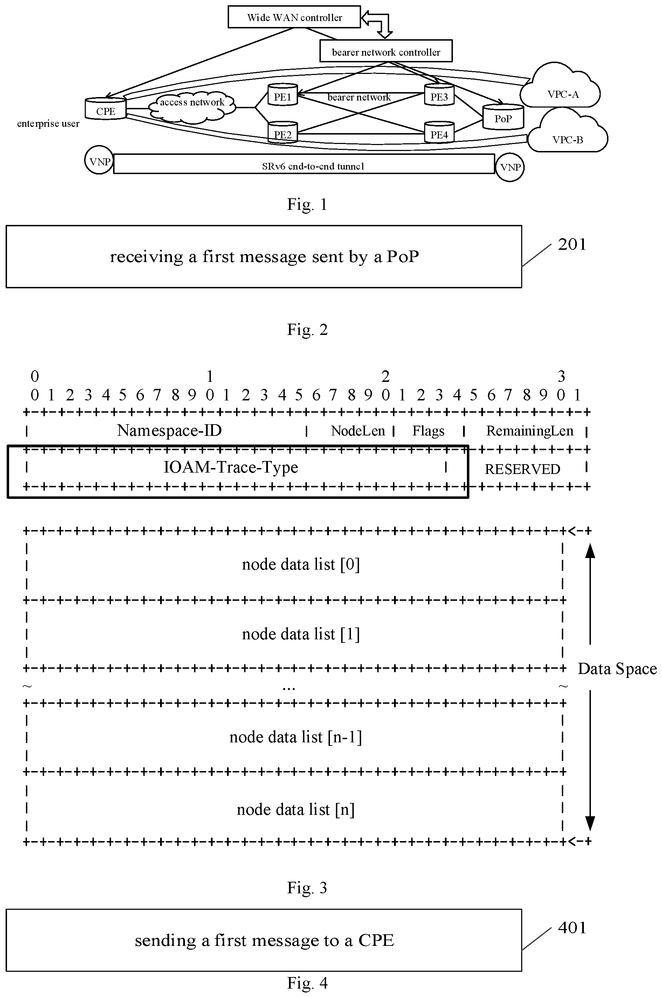

Smart Wide Area Network (WAN) aims to use SRv6 technology to integrate network resources from an end-to-end perspective by integrating the Underlay network and the Overlay network, to achieve the integration of cloud and network capabilities, and thus provide network plus cloud product services. Figure 1 shows an example of the architecture of an SRv6 -based SD-WAN system. The SRv6 -based SD-WAN system includes: Smart WAN controller (also called SD-WAN controller), bearer network controller (also called cloud backbone controller), edge router (Provider Edge, PE), CPE, PoP, etc. Among them,

The CPE has been added with functions such as SRv6/G-SRv6 tunnel, operation administration and maintenance (OAM)/protection, application awareness, and flow detection. In Figure 1, VPN is the abbreviation of Virtual Private Network.

PoP connects the private network (Virtual Private Cloud, VPC) in the cloud with the wide area network at the tenant level, thus opening up the cloud-network connection.

SD-WAN controller calculates the overlay path from CPE to PoP, or between CPE and CPE; obtains the backbone underlay path from the cloud backbone controller according to the service SLA requirements, splices the backbone underlay path and the overlay path and sends it to the CPE to achieve end-to-end connectivity.

The SRv6-based SD-WAN solution can achieve end-to-end underlay and overlay collaboration, provide differentiated SLA guarantees, implement refined service scheduling, manage and visualize the entire network, and improve the integrated operation experience. However, there are the following problems:
services that can provide the same service may be deployed in different public clouds or edge clouds. When switching cloud services in a multi-cloud scenario, the cloud- side resource monitoring system needs to report the cloud with poor service capabilities or faulty nodes to the cloud management platform, which then notifies the orchestration system and finally sends it to the Smart WAN controller, which adjusts the destination of the CPE. In this way, the entire management and control process is relatively long, the cloud service switching speed is slow, and the service delay is long.

Based on this, in various embodiments of the present disclosure, the CPE receives a first message sent by the PoP; where the first message carries the detection information of each cloud node of at least two cloud nodes. Thus, the CPE can perceive the detection information of multiple cloud nodes, thereby learning the service capabilities of different cloud nodes; when switching cloud services in a multi-cloud scenario, the CPE can select a cloud node that provides cloud services based on the detection information of the cloud node, thereby shortening the management and control process of switching cloud services between cloud nodes, speeding up the switching speed of cloud services, and thus reducing service delays.

The present disclosure is further described in detail below with reference to the accompanying drawings and embodiments.

The present disclosure provides a message processing method, which is applied to CPE. Referring to FIG. 2, the method includes:
Step 201: receiving a first message sent by a PoP.

The first message carries the first information of each cloud node of at least two cloud nodes; the first information represents the detection information of the cloud node.

Here, the first message can be understood as an SRv6 message. Wherein, at least two cloud nodes are located in the SD-WAN based on SRv6, and the at least two cloud nodes can provide at least one same cloud service to the user. The cloud node is a terminal or server of a cloud service provider.

In one embodiment, the first information of each cloud node of the at least two cloud nodes is encapsulated in the first TLV of the SRH of the first message.

Here, a TLV may be defined in the SRH, and the data field of the TLV may carry the first information of each of the at least two cloud nodes.

In one embodiment, the first information includes at least one of the following information of the cloud node:
network-related performance indicators;
service-related performance indicators;
availability detection results;
resource location detection results.

In actual application, the first information of network attributes includes network-related performance indicators, and the network-related performance indicators include at least one of the following: network delay, packet loss rate, routing hop count, Transmission Control Protocol (TCP) connection establishment, and network bandwidth.

The first information of the service attribute includes service-related performance indicators. For different cloud services, the service-related performance indicators may be different. For example, the performance indicators corresponding to the content delivery network (CDN) service include the first packet response time and the buffer hit rate; the performance indicators corresponding to the cloud storage service include the data upload rate and download rate.

The availability detection results indicate whether the cloud service provided by the cloud node is available.

The resource location detection result of the cloud node indicates whether there is cross-operator or cross-region resource access.

Specifically, the first TLV may be defined in the "Optional Type Length Value objects"of the SRH, and the first information of each cloud node in the at least two cloud nodes may be carried in the data field of the first TLV.

The value of the type field in the first TLV is used to describe the TLV type and may occupy 8 bits;
The length field in the first TLV is used to describe the length of the first information. For example, the field value of the length field indicates that the length of the first information is 8 bits. It should be noted that the length described by the field value of the length field does not include the length of the type field and the length field itself in the first TLV.

Here, the first information can be understood as OAM information, which can be specifically in-band operation management and maintenance (In-band / In-situ Operation Administration and Maintenance, IOAM) information.

In actual application, the "IOAM- Trace - Type" field can be defined in IOAM to indicate which type of first information the CPE needs to capture from the IOAM data space, where the categories of first information include the above-mentioned network-related performance indicators, service-related performance indicators, availability test results, and resource location test results. Specifically, the field value of the "IOAM-Trace-Type" field can be set to different values to indicate that the CPE reads the first information of the corresponding category from the IOAM data space. Of course, the bit representing the corresponding category can also be set to indicate that the first information of the corresponding category needs to be captured.

Exemplarily, as shown in Figure 3. For example, when the field value of IOAM-Trace-Type is "0001", the CPE reads network-related performance indicators from "node data list [0]". When the field value of IOAM-Trace-Type is "0010", the CPE reads service-related performance indicators from "node data list [1]". When the field value of IOAM-Trace-Type is "0011", the CPE reads network-related performance indicators from "node data list [0]"and reads service-related performance indicators from "node data list [1]". It should be noted that in Figure 3, Namespace-ID represents the namespace identifier, NodeLen represents the node length, Flags represents the flag bit, RemainingLen represents the remaining length, and RESERVED represents the reserved bit.

After receiving the second message sent by the terminal, the CPE encapsulates the IPv6 message header in the outer layer of the second message, and then sends the second message encapsulated with the IPv6 message header to the PoP. In one embodiment, after receiving the first message sent by the PoP, the method further includes:
changing a segment identifier (SID) of a last hop in a segment list of a second message from a first SID to a second SID, based on the first information of each cloud node in the at least two cloud nodes; wherein
the first SID represents a SID allocated to a user by a first cloud node of the at least two cloud nodes; and the second SID represents a SID allocated to the user by a second cloud node of the at least two cloud nodes.

Here, the CPE receives a second message sent by the terminal, the second message can be understood as an SRv6 message, and the destination IP address of the second message points to the first cloud node; according to the first cloud node pointed to by the second message, the segment list of the second message is determined, and the IPv6 message header is encapsulated in the outer layer of the second message, and the IPv6 message header includes the segment list.

When the CPE receives the first message sent by the PoP, it parses the first information carried in the received first message and obtains the detection information of each cloud node of at least two cloud nodes; based on the detection information of each cloud node, it determines the cloud node that can better meet the cloud service quality of the at least two cloud nodes, that is, the second cloud node that actually provides cloud services for the terminal that sends the second message; according to the mapping relationship between the cloud node and the SID, it determines the second SID corresponding to the second cloud node, changes the segment identifier (SID) of the last hop in the segment list of the second message from the first SID to the second SID, and does not modify the destination IP address of the second message. In this way, the terminal side is unaware and believes that the cloud service is still provided by the first cloud node.

When the SID in the segment list of the second message changes, the segment list of the second message needs to be updated to re-arrange a better network path to the second cloud node. Based on this, in one embodiment, after the SID of the last hop in the segment list of the second message is changed from the first SID to the second SID, the method includes:
updating the segment list of the second message, according to the second SID.

In actual application, when the terminal needs to sense whether the cloud node providing cloud services has changed, the CPE needs to notify the terminal to re-encapsulate the second message according to the IP address of the changed cloud node. Based on this, in one embodiment, before changing the SID of the last hop in the segment list of the second message from the first SID to the second SID, the method further includes:
notifying the terminal that sends the second message to re-encapsulate the second message according to an IP address of the second cloud node.

Here, the CPE notifies the terminal sending the second message to use the IP address of the second cloud node as the destination IP address, and re-encapsulates the second message according to the new destination IP address, so that the destination IP address in the second message sent by the CPE points to the second cloud node.

Before changing the SID of the last hop in the segment list of the second message, it is necessary to first determine the second cloud node. In one embodiment, before changing the SID of the last hop in the segment list of the second message from the first SID to the second SID, the method further includes:
determining the second cloud node, based on the first information and second information of each cloud node of the at least two cloud nodes; where the second information represents a path quality from the CPE to the corresponding cloud node.

Here, the path quality from the CPE to the corresponding cloud node may be path loss or path overhead.

In actual application, the CPE can determine the first score of the corresponding cloud node based on the first information of each cloud node; where when the first information includes at least two of the above categories, the first information of the cloud node can be weightedly summed to obtain the first score.

Furthermore, the CPE determines the second score of the corresponding cloud node based on the second information of each cloud node; performs weighted summation of the first score of each cloud node and the corresponding second score to obtain the third score of the corresponding cloud node; and determines the second cloud node based on the third score of each cloud node. The first score is used to evaluate the service quality, and the second score is used to evaluate the path cost. In this way, the CPE can comprehensively consider the service quality and path cost of the cloud node and select the second cloud node.

The second cloud node may be determined by the CPE or by the controller. In one embodiment, the determining the second cloud node based on the first information and the second information of each of the at least two cloud nodes includes:
reporting the first information and second information of each cloud node of the at least two cloud nodes to a controller;
receiving third information returned by the controller; wherein
   the third information is configured to indicate the second cloud node; the second cloud node is determined by the controller based on information reported by the CPE.

Here, the first information and second information of each cloud node is reported to the controller. When the controller receives the first information and the second information of each cloud node, it determines the second cloud node based on the first information and the second information of each cloud node, and returns the third information indicating the second cloud node to the CPE. The method for the controller to determine the second cloud node is similar to the method for the CPE to determine the second cloud node, which is not repeated here.

Correspondingly, an embodiment of the present disclosure provides a message processing method, which is applied to PoP. Referring to FIG. 4, the method includes:
Step 401: sending a first message to a customer premise equipment (CPE).

The first message carries the first information of each cloud node of at least two cloud nodes; the first information represents the detection information of the cloud node.

Here, the PoP obtains the first information of each cloud node of at least two cloud nodes, encapsulates the first information of each cloud node of at least two cloud nodes into a first message, and sends the first message to the CPE.

In one embodiment, the first information of each cloud node of the at least two cloud nodes is encapsulated in the first TLV of the SRH of the first message.

In one embodiment, before sending the first message to the CPE, the method further includes:
receiving first information reported by each of the at least two cloud nodes.

Here, the cloud node can detect its own network status, service capability, availability, resource location, etc., obtain corresponding detection results, and report the first information to the PoP according to the detection results.

The PoP receives the first information reported by each cloud node. The cloud node can report the first information to the PoP by setting a plug-in. When the PoP subscribes to the first information, the cloud node can report the first information to the PoP through an application programming interface (API). The cloud node can also trigger the cloud gateway to report the first information to the PoP according to the detection protocol.

Availability detection is used to detect whether a cloud node is available. Since service failures are usually very short-lived and closely related to time periods, for example, service failures are more likely to occur during peak access periods, in order to ensure the accuracy of availability testing results, it is necessary to conduct long-term real-time monitoring of the availability of cloud services at a high test frequency for each time period, and record long-term availability testing data for users to review.

Resource location detection mainly involves the resource location and resource allocation of cloud services. Considering that a good resource allocation and resource location strategy can allow users to access the required resources and services more quickly, once the resource allocation strategy goes wrong, it may cause additional network delays and lead to a decline in service quality. Therefore, cloud nodes can detect access to cloud services at multiple monitoring points to understand the resource location strategy of each cloud node and whether there is cross-operator or cross-regional resource access. These monitoring points can be distributed in different geographical locations, can correspond to different operators, and can use different access methods.

It should be noted that, when the PoP receives the first information reported by the at least two cloud nodes, the PoP generates a first message according to the first information reported by the at least two cloud nodes.

Exemplarily, when generating the first message, the PoP may set the field value of the "IOAM-Trace-Type "field in FIG. 3 according to the category of the first information, and write the first information of the corresponding category into the corresponding "node data list".

In one embodiment, the first information includes at least one of the following information of the cloud node:
network-related performance indicators;
service-related performance indicators;
availability detection results;
resource location detection results.

Here, in the case where the cloud node has completed network detection, the first information includes network -related performance indicators of the cloud node. In the case where the cloud node has completed service capability detection, the first information includes service-related performance indicators of the cloud node. In the case where the cloud node has completed availability detection, the first information includes availability detection results of the cloud node. In the case where the cloud node has performed resource location detection, the first information includes resource location detection results of the cloud node.

When the CPE receives the first message sent by the PoP, based on the first message, it determines whether to change the SID of the last hop in the segment list of the second message sent by the terminal, and when the SID of the last hop in the segment list of the second message is changed, it sends the second message after updating the segment list to the PoP. Accordingly, in one embodiment, the method further includes:
receiving a second message; where a segment identifier (SID) of a last hop in a segment list of the second message is configured as a second SID and a destination IP address of the second message points to a first cloud node; the second SID represents a SID assigned to a user by a second cloud node;
sending the second message, based on a mapping relationship between the second SID and the second cloud node.

Here, the second message can be sent by the CPE or by other PoPs. The SID of the last hop in the segment list of the second message is changed from the first SID to the second SID. Since the CPE does not modify the destination IP address of the second message, the destination IP address of the second message still points to the first cloud node.

The PoP stores the mapping relationship between the SID and the cloud node. When the PoP receives the second message sent by the CPE, it decapsulates the IPv6 message header of the second message to obtain the decapsulated second message, the second SID in the IPv6 message header of the second message, and the segment list.

PoP determines the second cloud node corresponding to the second SID based on a mapping relationship between the second SID and the second cloud node; based on the mapping relationship between cloud node and outbound interface and virtual local area network (VLAN), PoP determines the outbound interface and VLAN corresponding to the second cloud node. Based on the segment list of the second message, PoP determines the network path from PoP to the second cloud node, forwards the second message along the determined network path, and finally maps the second message to the outbound interface and VLAN corresponding to the second cloud node.

Considering that a PoP can be connected to one cloud node or at least two cloud nodes, that is, different PoPs are connected to different cloud nodes. In the case where the PoP is connected to the first cloud node and the second cloud node, the PoP does not need to modify the network path of the second message; in the case where the PoP is directly connected to the first cloud node and is not directly connected to the second cloud node, the PoP needs to modify the network path of the second message to send the second message to the next PoP. Based on this, in one embodiment, before sending the second message, the method further includes:
modifying a first path based on an IP address of the second cloud node.

The first path represents a path from the PoP to the second cloud node.

Here, the second message obtained by decapsulating the PoP needs to pass through at least one other PoP before reaching the second cloud node. Therefore, the PoP determines all PoPs passed from the PoP to the second cloud node based on the connection relationship between the PoP and the cloud node, and modifies the first path according to the determined IP addresses of the PoP and the second cloud node.

The following further describes the embodiment of the present disclosure in conjunction with the interactive process diagram.

The message processing method shown in FIGS includes:
Step 1: the terminal sends a second message to the CPE, and the destination IP address in the second message points to the first cloud node.
Step 2: the CPE receives the second message sent by the terminal, and encapsulates the IPv6 message header in the outer layer of the second message.
Step 3: the first cloud node reports the first information of the first cloud node to the PoP.

It should be noted that step 3, step 4 and step 1 are parallel steps.

In one embodiment, the first information includes at least one of the following information of the cloud node:
network-related performance indicators;
service-related performance indicators;
availability detection results;
resource location detection results.

Step 4: the second cloud node reports the first information of the second cloud node to the PoP.

Step 5: the PoP receives the first information reported by at least two cloud nodes.

Step 6: the PoP sends a first message to the CPE based on the received first information; the first message carries the first information of each cloud node of at least two cloud nodes.

In one embodiment, the first information of each cloud node of the at least two cloud nodes is encapsulated in the first TLV of the SRH of the first message.

Step 7: the CPE receives the first message sent by the PoP.

Step 8: based on the first information of each cloud node in the at least two cloud nodes, change the SID of the last hop in the segment list of the second message from the first SID to the second SID.

The first SID represents a SID allocated to the user by a first cloud node of the at least two cloud nodes; and the second SID represents a SID allocated to the user by a second cloud node of the at least two cloud nodes.

In one embodiment, before the CPE changes the SID of the last hop in the segment list of the second message from the first SID to the second SID, the CPE determines the second cloud node based on the first information and the second information of each cloud node of the at least two cloud nodes; where the second information represents the path quality from the CPE to the corresponding cloud node.

In one embodiment, before the CPE changes the SID of the last hop in the segment list of the second message from the first SID to the second SID, the CPE reports the first information and the second information of each of the at least two cloud nodes to the controller; and receives the third information returned by the controller; where the third information is configured to indicate the second cloud node; the second cloud node is determined by the controller based on the information reported by the CPE.

In one embodiment, before the CPE changes the SID of the last hop in the segment list of the second message from the first SID to the second SID, the CPE may also notify the terminal sending the second message to re-encapsulate the second message according to the IP address of the second cloud node.

In one embodiment, after the CPE changes the SID of the last hop in the segment list of the second message from the first SID to the second SID, the CPE updates the segment list of the second message according to the second SID.

Step 9: the CPE sends a second message to the PoP.

The SID of the last hop in the segment list of the second message is configured as the second SID and the destination IP address of the second message points to the first cloud node; the second SID represents the SID allocated to the user by the second cloud node.

Step 10: the PoP sends the second message based on the mapping relationship between the second SID and the second cloud node.

In one embodiment, when the PoP is not directly connected to the second cloud node, but other PoPs are directly connected to the second cloud node, before the PoP sends the second message, the PoP can also modify the first path based on the IP address of the second cloud node; where the first path represents the path from the PoP to the second cloud node.

According to the message processing method, the device, the customer premise equipment, the point-of-presence and the storage medium provided by the embodiments of the present disclosure, the CPE receives a first message sent by the PoP; where the first message carries detection information of each cloud node of at least two cloud nodes. Thus, the CPE can perceive the detection information of multiple cloud nodes, thereby learning the service capabilities of different cloud nodes; when switching cloud services in a multi-cloud scenario, the CPE can select a cloud node that provides cloud services based on the detection information of the cloud node, thereby shortening the management and control process of switching cloud services between cloud nodes, speeding up the switching speed of cloud services, and reducing service delays.

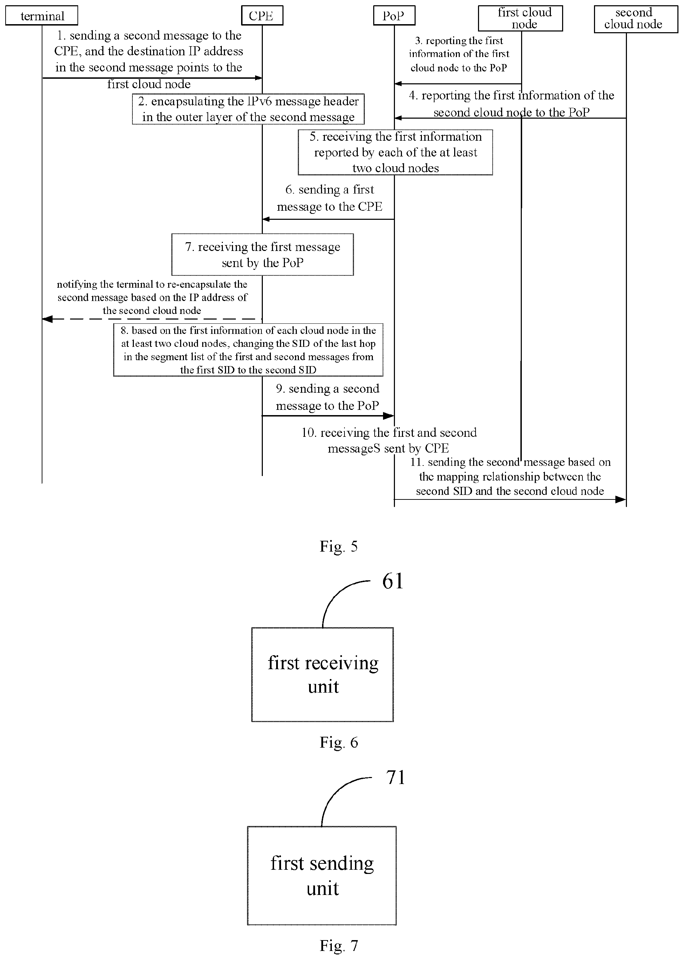

In order to implement the message processing method of the embodiment of the present disclosure, the embodiment of the present disclosure further provides a message processing device, which is arranged on the CPE. As shown in FIG.6, the device includes:
a first receiving unit 61, configured to receive a first message sent by a point of presence (PoP); where the first message carries first information of each cloud node of at least two cloud nodes, the first information represents detection information of the cloud node.

In the above embodiment, the first information of each cloud node of the at least two cloud nodes is encapsulated in a first TLV of a segment routing header (SRH) of the first message.

In the above embodiment, the device further includes:
a changing unit, configured to change a segment identifier (SID) of a last hop in a segment list of a second message from a first SID to a second SID, based on the first information of each cloud node in the at least two cloud nodes; where
the first SID represents a SID allocated to a user by a first cloud node of the at least two cloud nodes; and the second SID represents a SID allocated to the user by a second cloud node of the at least two cloud nodes.

In the above embodiment, the device further includes:
an updating unit, configured to update the segment list of the second message, according to the second SID.

In the above embodiment, the device further includes:
a notifying unit, configured to notify the terminal that sends the second message to re-encapsulate the second message according to an IP address of the second cloud node.

In the above embodiment, the device further includes:
a determining unit, configured to determine the second cloud node, based on the first information and second information of each cloud node of the at least two cloud nodes; where
the second information represents a path quality from the CPE to the corresponding cloud node.

In the above embodiment, the device further includes:
a second sending unit, configured to report the first information and second information of each cloud node of the at least two cloud nodes to a controller;
a second receiving unit, configured to receive third information returned by the controller; where
the third information is configured to indicate the second cloud node; the second cloud node is determined by the controller based on information reported by the CPE.

In the above embodiment, the first information includes at least one of the following information of the cloud node:
network-related performance indicators;
service-related performance indicators;
availability detection results;
resource location detection results.

In actual application, the first receiving unit 61, the second sending unit and the second receiving unit can be implemented by a processor in the message processing device combined with a communication interface, and the change unit, update unit, notification unit and determination unit can be implemented by a processor in the message processing device.

It should be noted that: the above embodiment provides a message processing device, and only uses the division of the above program modules as an example to illustrate when performing message processing. In actual applications, the above processing can be assigned to different program modules as needed, that is, the internal structure of the device is divided into different program modules to complete all or part of the processing described above. In addition, the message processing device provided in the above embodiment and the message processing method embodiment belong to the same concept, and the specific implementation process is detailed in the method embodiment, which will not be repeated here.

In order to implement the message processing method of the embodiment of the present disclosure, the embodiment of the present disclosure further provides a message processing device, which is arranged on the PoP. As shown in FIG7, the device includes:
a first sending unit 71, configured to send a first message to a customer premise equipment (CPE); where the first message carries first information of each cloud node of at least two cloud nodes, the first information represents detection information of the cloud node.

In the above embodiment, the device further includes:
a third receiving unit, configured to receive a second message; where a segment identifier (SID) of a last hop in a segment list of the second message is configured as a second SID and a destination IP address of the second message points to a first cloud node; the second SID represents a SID assigned to a user by a second cloud node;
a third sending unit, configured to send the second message, based on a mapping relationship between the second SID and the second cloud node.

In the above embodiment, the device further includes:
a modifying unit, configured to modify a first path based on an IP address of the second cloud node; where
the first path represents a path from the PoP to the second cloud node.

In the above embodiment, the first information of each cloud node of the at least two cloud nodes is encapsulated in a first TLV of a segment routing header (SRH) of the first message.

In the above embodiment, the device further includes:
a fourth receiving unit, configured to receive first information reported by each of the at least two cloud nodes.

In the above embodiment, the first information includes at least one of the following information of the cloud node:
network-related performance indicators;
service-related performance indicators;
availability detection results;
resource location detection results.

In actual application, the first sending unit 71, the third sending unit, the third receiving unit and the fourth receiving unit can be implemented by a processor in the message processing device in combination with a communication interface, and the modification unit can be implemented by a processor in the message processing device.

It should be noted that: the above embodiment provides a message processing device, and only uses the division of the above program modules as an example to illustrate when performing message processing. In actual applications, the above processing can be assigned to different program modules as needed, that is, the internal structure of the device is divided into different program modules to complete all or part of the processing described above. In addition, the message processing device provided in the above embodiment and the message processing method embodiment belong to the same concept, and the specific implementation process is detailed in the method embodiment, which will not be repeated here.

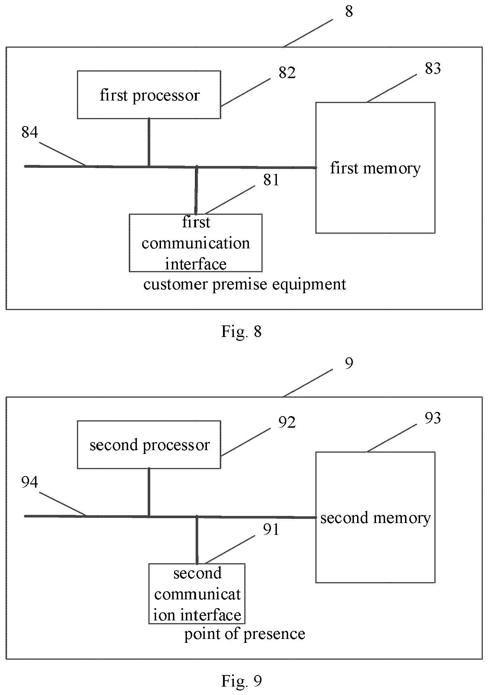

Based on the hardware implementation of the above program modules, and in order to implement the method on the CPE side of the embodiment of the present disclosure, the embodiment of the present disclosure further provides a customer terminal device, as shown in FIG8, the customer terminal device 8 includes:
a first communication interface 81, capable of exchanging information with other network nodes;
a first processor 82, connected to the first communication interface 81 to implement information exchange with other network nodes, and is used to execute the method provided by one or more technical solutions of the CPE side when running a computer program. The computer program is stored in the first memory 83.

Specifically, the first communication interface 81 is configured to :
receive a first message sent by a PoP; where the first message carries first information of each cloud node of at least two cloud nodes; and the first information represents detection information of the cloud node.

In one embodiment, the first information of each cloud node of the at least two cloud nodes is encapsulated in the first TLV of the SRH of the first message.

In one embodiment, the first processor 82 is configured to:
based on the first information of each cloud node in the at least two cloud nodes, the SID of the last hop in the segment list of the second message is changed from the first SID to the second SID; where the first SID represents the SID assigned to the user by the first cloud node in the at least two cloud nodes; and the second SID represents the SID assigned to the user by the second cloud node in the at least two cloud nodes.

In one embodiment, the first processor 82 is further configured to: update a segment list of the second message according to the second SID.

In one embodiment, the first processor 82 is further configured to: notify the terminal that sends the second message to re-encapsulate the second message according to the IP address of the second cloud node.

In one embodiment, the first processor 82 is further configured to: determine the second cloud node based on the first information and the second information of each cloud node of the at least two cloud nodes; where the second information represents the path quality from the CPE to the corresponding cloud node.

In one embodiment, the first communication interface 81 is further configured to:
report first information and second information of each cloud node of the at least two cloud nodes to the controller;
receive the third information returned by the controller; where

The third information is configured to indicate the second cloud node; the second cloud node is determined by the controller based on the information reported by the CPE.

In one embodiment, the first information includes at least one of the following information of the cloud node:
network-related performance indicators;
service-related performance indicators;
availability detection results;
resource location detection results.

It should be noted that the specific processing process of the first processor 82 and the first communication interface 81 can be understood by referring to the above method.

Of course, in actual application, the various components in the customer premise equipment 8 are coupled together through the bus system 84. It can be understood that the bus system 84 is used to realize the connection and communication between these components. In addition to the data bus, the bus system 84 also includes a power bus, a control bus and a status signal bus. However, for the sake of clarity, various buses are marked as the bus system 84 in FIG. 8.

The first memory 83 in the present disclosure is configured to store various types of data to support the operation of the customer premise equipment 8. Examples of such data include: any computer program used to operate on the customer premise equipment 8.

The above embodiment of the present disclosure can be applied to the first processor 82, or implemented by the first processor 82. The first processor 82 may be an integrated circuit chip with signal processing capabilities. In the implementation process, each step of the above method can be completed by the hardware integrated logic circuit in the first processor 82 or the instruction in the form of software. The above-mentioned first processor 82 may be a general-purpose processor, a digital signal processor (Digital Signal Processor, DSP), or other programmable logic devices, discrete gates or transistor logic devices, discrete hardware components, etc. The first processor 82 can implement or execute the disclosed methods, steps and logic block diagrams in the embodiment of the present disclosure. The general-purpose processor may be a microprocessor or any conventional processor, etc. The steps of the method disclosed in the embodiment of the present disclosure can be directly embodied as a hardware decoding processor to execute, or a combination of hardware and software modules in the decoding processor to execute. The software module can be located in a storage medium, which is located in the first memory 83. The first processor 82 reads the information in the first memory 83 and completes the steps of the above method in combination with its hardware.

In an exemplary embodiment, the customer premise equipment 8 may be implemented by one or more application specific integrated circuits (ASIC), DSP, programmable logic device (PLD), complex programmable logic device (CPLD), field programmable gate array (FPGA), general processor, controller, microcontroller (MCU), microprocessor, or other electronic components to execute the aforementioned method.

Based on the hardware implementation of the above program modules, and in order to implement the method on the PoP side of the embodiment of the present disclosure, the embodiment of the present disclosure further provides a point of presence, as shown in FIG9, the point of presence 9 includes:
a second communication interface 91, capable of exchanging information with other network nodes;
a second processor 92, connected to the second communication interface 91 to implement information exchange with other network nodes, and is used to execute the method provided by one or more technical solutions of the PoP side when running a computer program. The computer program is stored in the second memory 93.

Specifically, the second communication interface 91 is configured to:
send A first message to the CPE; where the first message carries first information of each cloud node of at least two cloud nodes; and the first information represents detection information of the cloud node.

In one embodiment, the first information of each cloud node of the at least two cloud nodes is encapsulated in the first TLV of the SRH of the first message.

In one embodiment, the second communication interface 91 is further configured to:
receive a second message; where the SID of the last hop in the segment list of the second message is configured as the second SID and the destination IP address of the second message points to the first cloud node; the second SID represents the SID assigned to the user by the second cloud node;
based on the mapping relationship between the second SID and the second cloud node, send the second message.

In one embodiment, the second processor 92 is configured to: modify a first path based on an IP address of the second cloud node; where the first path represents a path from the PoP to the second cloud node.

In one embodiment, the second communication interface 91 is further configured to: receive first information reported by each of the at least two cloud nodes.

In one embodiment, the first information includes at least one of the following information of the cloud node:
network-related performance indicators;
service-related performance indicators;
availability detection results;
resource location detection results.

It should be noted that the specific processing process of the second processor 92 and the second communication interface 91 can be understood by referring to the above method.

Of course, in actual application, the various components in the point of presence 9 are coupled together through the bus system 94. It can be understood that the bus system 94 is used to realize the connection and communication between these components. In addition to the data bus, the bus system 94 also includes a power bus, a control bus, and a status signal bus. However, for the sake of clarity, various buses are labeled as the bus system 94 in FIG. 9.

The second memory 93 in the embodiment is used to store various types of data to support the operation of the point of presence 9. Examples of such data include: any computer program used to operate on the point of presence 9.

The method in the above embodiment of the present disclosure can be applied to the second processor 92, or implemented by the second processor 92. The second processor 92 may be an integrated circuit chip with signal processing capabilities. In the implementation process, each step of the above method can be completed by the hardware integrated logic circuit in the second processor 92 or the instruction in the form of software. The above second processor 92 can be a general processor, DSP, or other programmable logic devices, discrete gates or transistor logic devices, discrete hardware components, etc. The second processor 92 can implement or execute the methods, steps and logic block diagrams disclosed in the embodiment of the present disclosure. The general processor can be a microprocessor or any conventional processor, etc. The steps of the method disclosed in the embodiment of the present disclosure can be directly embodied as a hardware decoding processor to execute, or a combination of hardware and software modules in the decoding processor to execute. The software module can be located in a storage medium, which is located in the second memory 93. The second processor 92 reads the information in the second memory 93 and completes the steps of the above method in combination with its hardware.

In an exemplary embodiment, the network presence point 9 may be implemented by one or more ASICs, DSPs, PLDs, CPLDs, FPGAs, general purpose processors, controllers, MCUs, Microprocessors, or other electronic components to perform the aforementioned methods.

It can be understood that the memory (first memory 83 and second memory 93) of the embodiment of the present disclosure can be a volatile memory or a non-volatile memory, and can also include both volatile and non-volatile memories. Among them, the non-volatile memory can be a read-only memory (ROM), a programmable read-only memory (PROM), an erasable programmable read-only memory (EPROM), an electrically erasable programmable read-only memory (EEPROM), a magnetic random access memory (FRAM), a flash memory, a magnetic surface memory, an optical disc, or a compact disc read-only memory (CD-ROM); the magnetic surface memory can be a disk memory or a tape memory. The volatile memory can be a random access memory (RAM), which is used as an external cache. By way of example but not limitation, many forms of RAM are available, such as Static Random Access Memory (SRAM), Synchronous Static Random Access Memory (SSRAM), Dynamic Random Access Memory (DRAM), Synchronous Dynamic Random Access Memory (SDRAM), Double Data Rate Synchronous Dynamic Random Access Memory (DDRSDRAM), Enhanced Synchronous Dynamic Random Access Memory (ESDRAM), SyncLink Dynamic Random Access Memory (SLDRAM), Direct Rambus Random Access Memory (DRRAM). The memory described in the embodiments of the present disclosure is intended to include, but is not limited to, these and any other suitable types of memory.

In an exemplary embodiment, the embodiment of the present disclosure further provides a storage medium, namely a computer storage medium, specifically a computer-readable storage medium, for example, including a first memory 903 storing a computer program, and the computer program can be executed by the first processor 82 of the customer premise equipment 8 to complete the steps of the customer premise equipment side method. For another example, a second memory 93 storing a computer program can be executed by the second processor 92 of the network point 9 to complete the steps of the network point side method. The computer-readable storage medium can be a memory such as FRAM, ROM, PROM, EPROM, EEPROM, Flash Memory, magnetic surface memory, optical disk, or CD-ROM.

It should be noted that: "first", "second", etc. are used to distinguish similar objects, and are not necessarily used to describe a specific order or sequence.

In addition, the technical solutions described in the embodiments of the present disclosure may be arbitrarily combined without conflict.

The above description is only a preferred embodiment of the present disclosure and is not intended to limit the protection scope of the present disclosure.

## Claims

1. A message processing method, applied to a customer premise equipment (CPE), comprising:
receiving a first message sent by a point of presence (PoP); wherein
the first message carries first information of each cloud node of at least two cloud nodes, the first information represents detection information of the cloud node.

2. The method according to claim 1, wherein the first information of each cloud node of the at least two cloud nodes is encapsulated in a first TLV of a segment routing header (SRH) of the first message.

3. The method according to claim 1, further comprising:
changing a segment identifier (SID) of a last hop in a segment list of a second message from a first SID to a second SID, based on the first information of each cloud node in the at least two cloud nodes; wherein
the first SID represents a SID allocated to a user by a first cloud node of the at least two cloud nodes; and the second SID represents a SID allocated to the user by a second cloud node of the at least two cloud nodes.

4. The method according to claim 3, wherein after changing the SID of the last hop in the segment list of the second message from the first SID to the second SID, the method comprises:
updating the segment list of the second message, according to the second SID.

5. The method according to claim 3, wherein before changing the SID of the last hop in the segment list of the second message from the first SID to the second SID, the method further comprises:
notifying the terminal that sends the second message to re-encapsulate the second message according to an IP address of the second cloud node.

6. The method according to claim 3, wherein before changing the SID of the last hop in the segment list of the second message from the first SID to the second SID, the method further comprises:
determining the second cloud node, based on the first information and second information of each cloud node of the at least two cloud nodes; wherein
the second information represents a path quality from the CPE to the corresponding cloud node.

7. The method according to claim 6, wherein the determining the second cloud node based on the first information and the second information of each of the at least two cloud nodes comprises:
reporting the first information and second information of each cloud node of the at least two cloud nodes to a controller;
receiving third information returned by the controller; wherein
the third information is configured to indicate the second cloud node; the second cloud node is determined by the controller based on information reported by the CPE.

8. The method according to any one of claims 1 to 7, wherein the first information comprises at least one of the following information of the cloud node:
network-related performance indicators;
service-related performance indicators;
availability detection results;
resource location detection results.

9. A message processing method, applied to point of presence (PoP), comprising:
sending a first message to a customer premise equipment (CPE); wherein
the first message carries first information of each cloud node of at least two cloud nodes, the first information represents detection information of the cloud node.

10. The method according to claim 9, wherein the first information of each cloud node of the at least two cloud nodes is encapsulated in a first TLV of a segment routing header (SRH) of the first message.

11. The method according to claim 9, further comprising:
receiving a second message; wherein a segment identifier (SID) of a last hop in a segment list of the second message is configured as a second SID and a destination IP address of the second message points to a first cloud node; the second SID represents a SID assigned to a user by a second cloud node;
sending the second message, based on a mapping relationship between the second SID and the second cloud node.

12. The method according to claim 11, wherein before sending the second message, the method further comprises:
modifying a first path based on an IP address of the second cloud node; wherein
the first path represents a path from the PoP to the second cloud node.

13. The method according to claim 9, wherein before sending the first message to the CPE, the method further comprises:
receiving first information reported by each of the at least two cloud nodes.

14. The method according to any one of claims 9 to 13, wherein the first information comprises at least one of the following information of the cloud node:
network-related performance indicators;
service-related performance indicators;
availability detection results;
resource location detection results.

15. A message processing device, comprising:
a first receiving unit, configured to receive a first message sent by a point of presence (PoP); wherein
the first message carries first information of each cloud node of at least two cloud nodes, the first information represents detection information of the cloud node.

16. A message processing device, comprising:
a first sending unit, configured to send a first message to a customer premise equipment (CPE); wherein
the first message carries first information of each cloud node of at least two cloud nodes, the first information represents detection information of the cloud node.

17. A customer premise equipment (CPE), comprising a first processor and a first communication interface, wherein
the first communication interface is configured receive a first message sent by a point of presence (PoP); wherein
the first message carries first information of each cloud node of at least two cloud nodes, the first information represents detection information of the cloud node.

18. A point of presence (PoP), comprising a second processor and a second communication interface, wherein
a second communication interface is configured to send a first message to a customer premise equipment (CPE); wherein
the first message carries first information of each cloud node of at least two cloud nodes, the first information represents detection information of the cloud node.

19. A customer premise equipment (CPE), comprising a first processor and a first memory for storing a computer program executable on the first processor, wherein
the first processor is configured to execute the computer program to perform the method according to any one of claims 1 to 8.

20. A point of presence (PoP), comprising a second processor and a second memory for storing a computer program executable on the processor, wherein
the second processor is configured to execute the computer program to perform the method according to any one of claims 9 to 14.

21. A storage medium, storing a computer program stored, wherein the computer program is executed by a processor to perform the method according to any one of claims 1 to 8, or to perform the method according to any one of claims 9 to 14.
